# EUROPÄISCHE PATENTANMELDUNG

(11) **EP 0 930 435 A1**
(43) Veröffentlichungstag der Anmeldung: **21.07.1999**
(21) Anmeldenummer: 98122498.3
(22) Anmeldetag: 27.11.1998
(51) Int. Cl.: F16B 7/14

(54) **Verstellmechanismus für ein in einem Aussenrohr verschiebbares Innenrohr**

(30) Priorität: 30.12.1997 DE 19758135
(71) Anmelder: A. Raymond & Cie, F-38028 Grenoble-Cédex (FR)
(72) Erfinder: Brugger, Markus, 79594 Inzlingen (DE); Daler, Helmo, 79539 Lörrach (DE)
(74) Vertreter: Kirchgaesser, Johannes, Dipl.-Ing.

(57) **Zusammenfassung**

Der vorliegende **Verstellmechanismus** ist für ein in einem Außenrohr verschiebbares Innenrohr bestimmt. Er besteht aus einem mit dem Ende des Innenrohres ( 5 ) verbindbaren Spreizdorn ( 1 ) mit sich konisch verjüngendem Außengewinde ( 6 ) und einer auf den Dorn ( 1 ) aufdrehbaren, längsgeschlitzten Spreizhülse ( 2 ) mit einem sich entsprechend konisch verjüngenden Innengewinde ( 10 ) zum Festklemmen der Hülse ( 2 ) im Außenrohr ( 13 ). Die Spreizhülse ( 2 ) ist von einem ebenfalls längsgeschlitzten Metallring ( 3 ) umgeben, der in einer ringförmigen Aussparung ( 11 ) in der Hülsenwand ( 9 ) verdrehsicher versenkbar ist. Der Ring ( 3 ) weist, über den Umfang gleichmäßig verteilt, mehrere achsparallele Erhebungen ( 12 ) auf, welche die Hülsenwand ( 9 ) so weit überragen, daß diese im entspannten Verschiebezustand der Spreizhülse ( 2 ) die Innenwand des Außenrohres ( 13 ) berühren und sich beim Eindrehen des Dorns ( 1 ) in die Spreizhülse ( 2 ) an der Innenwand sicher abstützen. Hierdurch wird erreicht, daß die Spreizhülse ( 2 ) - auch nach längerem Gebrauch - beim Lösen stets in Kontakt mit dem Außenrohr ( 13 ) bleibt und beim Eindrehen des Spreizdorns ( 1 ) sofort greift.

## Beschreibung

Die Erfindung bezieht sich auf einen Verstellmechanismus für ein in einem Außenrohr verschiebbares Innenrohr. Ein derartiger Verstellmechanismus wird bspw. bei einem teleskopartig ineinander schiebbaren Besenstiel, Fensterwischerstiel oder einem anderen, ähnlich einsetzbaren Stiel verwendet, bei dem der Abstand zwischen dem Handgriff des Stiels und dem Reinigungsgerät schnell verstellbar und nach der Verstellung sicher fixierbar sein muß.

Aus der Praxis ist ein solcher Verstellmechanismus bekannt, der im wesentlichen aus einem mit dem Ende des Innenrohres verbindbaren Spreizdorn mit sich konisch verjüngendem Außengewinde und einer auf den Dorn aufdrehbaren, längsgeschlitzten Spreizhülse mit einem sich entsprechend konisch erweiternden Innengewinde besteht, wobei der Außendurchmesser der Hülsenwand im ungespreizten Zustand geringfügig kleiner ist als der Innendurchmesser des Außenrohres (EP 0 814 272 A2).

Bei diesem Verstellmechanismus besteht häufig das Problem, daß die festgeklemmte Position durch Krafteinsatz beim Arbeiten verschoben wird, und daß der Verstellmechanismus nach längerem Gebrauch beim Lösen den Kontakt zum Außenrohr verliert und es dann schwierig wird, nach dem Verstellen die Spreizhülse wieder an der Innenwand des Außenrohres zur Anlage zu bringen. Gelingt das nicht, so läßt sich der Spreizdorn auch nicht in die Spreizhülse eindrehen.

Aufgabe der Erfindung ist es, den Verstellmechanismus so zu gestalten, daß dieser in der Lage ist, deutlich höhere Axialkräfte aufzunehmen, und daß die Spreizhülse auch nach längerem Gebrauch beim Lösen stets in Kontakt mit dem Außenrohr bleibt, so daß diese beim Eindrehen des Spreizdorns sofort greift und an der vorbestimmten Stelle fixiert werden kann.

Diese Aufgabe wird erflndungsgemäß dadurch gelöst, daß die Spreizhülse von einem ebenfalls längsgeschlitzten Metallring umgeben ist, der in einer ringförmigen Aussparung in der Hülsenwand verdrehsicher versenkbar ist und der, über den Umfang gleichmäßig verteilt, mehrere achsparallele Sicken oder Erhebungen aufweist, welche die Hülsenwand soweit überragen, daß diese im entspannten, ungespreizten Verschiebezustand der Spreizhülse die Innenwand des Außenrohres berühren. Dadurch wird erreicht, daß der Metallring stets in Kontakt mit der Rohrwand bleibt und die Speizhülse beim Eindrehen des Dorns an der Innenwand sicheren Halt findet.

Zum leichteren Aufziehen des Metallrings auf die Spreizhülse und besseren Fixierung in der Aussparung weist der Metallring nach einem weiteren Merkmal der Erfindung zwei zur Ringmitte hin abgewinkelte Endkanten auf, die beim Aufziehen auf die Spreizhülse an entsprechenden Vorsprüngen der Spreizhülse beiderseits des Schlitzes anlegbar sind.

Außerdem kann der Kontakt zwischen der Spreizhülse und dem Außenrohr nach einer weiteren Ausgestaltung der Erfindung noch dadurch verstärkt werden, daß an der Spreizhülse außerhalb der Aussparung mehrere, sich über die Hülsenwand spiralförmig nach außen erhebende Federlinger angeformt sind, welche sich im entspannten Verschiebezustand der Hülse ebenfalls an der Innenwand des Außenrohres abstützen.

In der Zeichnung ist ein Ausführungsbeispiel der Erfindung dargestellt und soll nachfolgend näher erläutert werden. Es zeigt
- Fig. 1: einen Spreizdorn in Seitenansicht,
- Fig. 2: den gleichen Spreizdorn in Draufsicht mit Blick in den zylindrischen Hohlschaft,
- Fig. 3: die längsgeschlitzte Spreizhülse in Ansicht "A" gemäß Fig. 4
- Fig. 4: die gleiche Spreizhülse in Seitenansicht,
- Fig. 5: einen Schnitt durch die Spreizhülse gemäß Linie V - V in Fig. 4
- Fig. 6: den erfindungsgemäß ausgebildeten Metallring im Anlieferungszustand,
- Fig. 7: den gleichen Metallring im gespreizten Zustand,
- Fig. 8: einen Schnitt durch die Spreizhülse mit eingedrehtem Spreizdorn und eingebautem Metallring im Kontakt mit dem Außenrohr gemäß Linie VIII - VIII in Fig. 9 und
- Fig. 9: den kompletten Verstellmechanismus mit Innenrohr im Zusammenwirken mit dem teleskopartig aufgeschobenen Außenrohr im Längsschnitt.

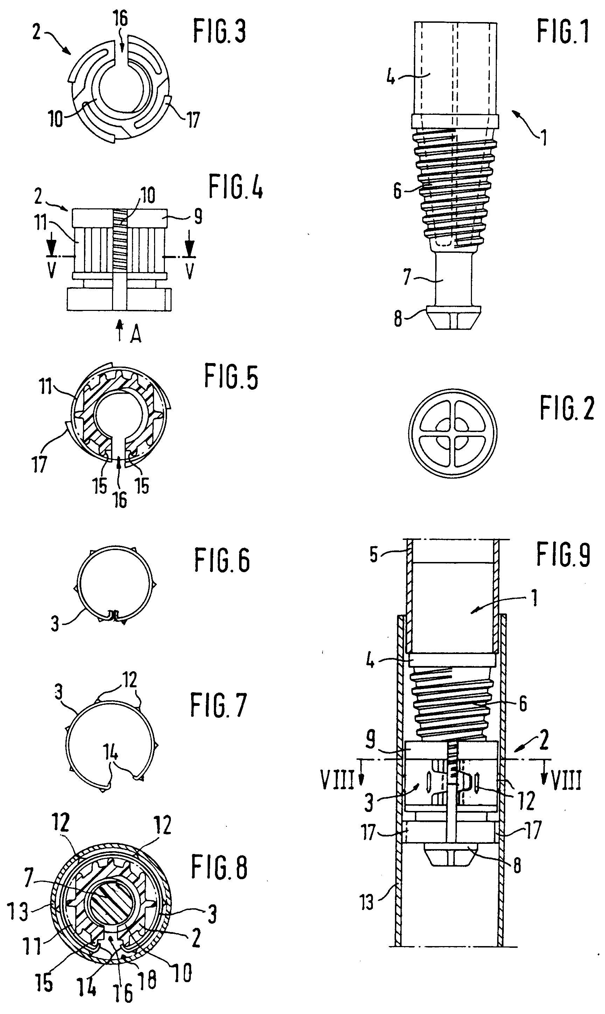

Der in den Figuren dargestellte Verstellmechanismus besteht im wesentlichen aus einem Spreizdorn 1, einer Spreizhülse 2 und einem Metallring 3. Der Spreizdorn 1 besitzt, wie aus Fig. 1 und 2 ersichtlich, einen zylindrischen Hohlschaff 4, welcher im Endbereich eines Innenrohres 5 mittels Preßsitz und erforderlichenfalls unter Verwendung sonstiger bekannter Befestigungsmittel verankerbar ist ( vgl. Fig. 9). Am Hohlschaft 4 schließt ein sich konisch verjüngendes Außengewinde 6 an, welches mit einem zylindrischen Teil 7 und einem flanschartigen Endteil 8 abschließt.

Die zugehörige Spreizhülse 2 besitzt, wie aus den Figuren 3 bis 5 erkennbar, eine längsgeschlitzte Hülsenwand 9 mit einem sich ebenfalls konisch verjüngenden Innengewinde 10. Der Außendurchmesser der Hülsenwand 9 ist hierbei im entspannten, ungespreizten Verschiebezustand geringfügig kleiner als der Innendurchmesser des mit der Spreizhülse 2 zu verklemmenden Außenrohres 13 ( vgl. Fig. 9 ).

Die Spreizhülse 2 ist von einem ebenfalls längsgeschlitzten Metallring 3 umgeben, welcher in einer entsprechend ringförmigen Aussparung 11 der Hülsenwand 9 versenkbar ist und dadurch verdrehsicher gehalten wird. Dieser Metallring 3 weist, über seinen Umfang gleichmäßig verteilt, mehrere achsparallele Sicken oder Erhebungen 12 auf, welche die Hülsenwand 9 soweit überragen, daß diese im entspannten, ungespreizten Verschiebezustand der Spreizhülse 2 die Innenwand des Außenrohres 13 berühren ( vgl. Figur 9 ), so daß der Metallring 3 beim Eindrehen des Spreizdorns 1 in die Hülse 2 den notwendigen Halt an der Innenwand findet.

Der Metallring 3 weist zu diesem Zweck zwei zur Ringmitte hin abgewinkelte Endkanten 14 auf, welche sich nach dem Einlegen des Metallringes 3 in die Aussparung 11 an entsprechend geformten Vorsprüngen 15 der Spreizhülse 2 beiderseits des Schlitzes 16 anlegen, wodurch der Metallring 3 in der Aussparung 11 undrehbar festgelegt ist.

Um den Kontakt mit dem Außenrohr zusätzlich noch sicherer zu machen, sind an der Spreizhülse 2 außerhalb des Metallrings 3 mehrere, sich über die Hülsenwand 9 spiralförmig nach außen erhebende Federfinger 17 angeformt, welche sich im entspannten Verschiebezustand der Hülse 2 an der Innenwand des Außenrohres 13 abstützen. Da an der Innenseite des Außenrohres 13 herstellungsbedingt stets eine Längsrippe 18 absteht, finden die Federfinger 17 hieran, genau wie die Sicken oder Erhebungen 12 des Metallringes 3, zwangsläufig ihren Halt.

Beim Zusammenbau des Verstellmechanismus wird zunächst der Spreizdorn 1 mit seinem Endteil 8 voraus in die Spreizhülse 2 eingeführt, wobei die geschlitzte Hülsenwand 9 elastisch auseinandergedrückt wird, bis das Endteil 8 die Spreizhülse 2 durchdrungen hat und unterhalb der Federfinger 17 vorsteht. Die Hülse 2 liegt hierbei locker am zylindrischen Teil 7 des Dorns 1 an und wird durch das flanschartige Endteil 8 gehalten.

Nun wird der Metallring 3 im Sinne von Figur 7 aufgespreizt und über die Außenwand 9 in axialer Richtung über die Hülse 2 geschoben, bis der Ring 3 in der ringförmigen Aussparung 11 der Hülsenwand 9 eingebettet ist. Hierbei muß darauf geachtet werden, daß die nach innen abgewinkelten Endkanten 14 des Ringes 3 an den entsprechenden Vorsprüngen 15 beiderseits des Schlitzes 16 anlegen, so daß der Metallring 3 in der Aussparung 11 undrehbar festgelegt ist.

Der Dorn 1 wird sodann mit dem zylindrischen Hohlschaft 4 in das im Durchmesser kleinere Innenrohr 5 eingedrückt und beispielsweise durch Preßsitz oder andere geeignete Mittel befestigt. Nun kann der Verstellmechanismus mit dem Innenrohr 5 in ein im Durchmesser etwas größeres Außenrohr 13 teleskopartig eingeführt werden. Sobald die gewünschte Eindringtiefe erreicht ist, wird das Innenrohr 5 von Hand gedreht. Dabei dringt das konische Dorngewinde 6 in das ebenfalls konische Innengewinde 10 ein, wobei die Hülse 2 mit dem Metallring 3, deren spitze Erhebungen 12 sich an der Innenwand des Außenrohrs 13 abstützen, auseinandergespreizt wird. Das Innenrohr 5 wird darauf solange gedreht, bis der Verstellmechanismus im Außenrohr 13 absolut festsitzt und sich auch in axialer Richtung nicht mehr verschieben läßt.

Will man die Eindringtiefe des Innenrohres 5 im Außenrohr 13 verändern, so wird das Innenrohr 5 in entgegengesetzter Richtung losgedreht, bis der Kontakt zwischen Spreizring 2 und Außenrohr 13 so weit gelockert ist, daß sich der Verstellmechanismus in die gewünschte Lage verschieben läßt. Sodann wird der Dorn 1 über das Innenrohr 5 wieder in die Spreizhülse 2 eingedreht.

## Patentansprüche

1. **Verstellmechanismus** für ein in einem Außenrohr verschiebbares Innenrohr, bestehend aus einem mit dem Ende des Innenrohres ( 5 ) verbindbaren Spreizdorn ( 1 ) mit sich konisch verjügendem Außengewinde ( 6 ) und einer auf den Dorn ( 1 ) aufdrehbaren, längsgeschlitzten Spreizhülse ( 2 ) mit einem sich entsprechend konisch verjüngenden Innengewinde ( 10 ) zum Festklemmen der Hülse ( 2 ) im Außenrohr ( 13 ), wobei der Außendurchmesser der Hülsenwand ( 9 ) im ungespreizten Zustand geringfügig kleiner ist als der Innendurchmesser des Außenrohres ( 13 ), **dadurch gekennzeichnet**, daß die Spreizhülse ( 2 ) von einem ebenfalls längsgeschlitzten Metallring ( 3 ) umgeben ist, der in einer ringförmigen Aussparung ( 11 ) in der Hülsenwand ( 9 ) verdrehsicher versenkbar ist und, über den Umfang gleichmäßig verteilt, mehrere achsparallele Sicken oder Erhebungen ( 12 ) aufweist, welche die Hülsenwand ( 9 ) soweit überragen, daß sie im entspannten Verschiebezustand der Spreizhülse ( 2 ) die Innenwand des Außenrohres ( 13 ) berühren und sich beim Eindrehen des Dorns ( 1 ) in die Spreizhülse ( 2 ) an der Innenwand sicher abstützen.

2. Verstellmechanismus nach Anspruch 1, dadurch gekennzeichnet, daß der Metallring ( 3 ) zwei zur Ringmitte hin abgewinkelte Endkanten ( 14 ) aufweist, die an entsprechenden Vorsprüngen ( 15 ) der Spreizhülse ( 2 ) beiderseits des Schlitzes (16) anlegbar sind.

3. Verstellmechanismus nach Anspruch 1 oder 2, dadurch gekennzeichnet, daß an der Spreizhülse ( 2 ) außerhalb der Aussparung ( 11 ) mehrere, sich über die Hülsenwand ( 9 ) spiralförmig nach außen erhebende Federfinger ( 17 ) angeformt sind, welche sich im Verschiebezustand der Hülse ( 2 ) an der Innenwand des Außenrohres ( 13 ) abstützen.
